# FASCICULE DE BREVET EUROPEEN

(11) **EP 0 425 338 B1**
(45) Date de publication et mention de la délivrance du brevet: **31.03.1993**
(21) Numéro de dépôt: 90402857.8
(22) Date de dépôt: 12.10.1990
(51) Int. Cl.: B60K 17/22, H02K 49/04, F16D 3/41, B60T 1/06

(54) **Transmissions de véhicules équipées de ralentisseurs électriques**
Getriebe für Fahrzeuge mit elektrischer Bremsvorrichtung
Transmission for vehicles with electric retarders

(30) Priorité: 17.10.1989 FR 8913560
(43) Date de publication de la demande: 02.05.1991
(73) Titulaire: LABAVIA S.G.E., F-78180 Montigny le Bretonneux (FR)
(72) Inventeur: Rugraff, Guy, F-93500 Pantin (FR)
(74) Mandataire: Behaghel, Pierre

(56) Documents cités:
- EP-A- 0 094 468
- FR-A- 2 247 846
- GB-A- 655 168
- GB-A- 2 122 035
- US-A- 4 128 147
- US-A- 4 138 863

## Description

L'invention est relative aux transmissions de véhicules, c'est-à-dire aux chaînes d'organes transmettant le mouvement de rotation du moteur aux roues du véhicule, organes comprenant une boite de vitesses, un pont et un arbre à double cardan assurant le transfert des couples de la boite au pont tout en permettant leurs déplacements transversaux relatifs.

Elle vise plus particulièrement, parmi ces transmissions, celles équipées d'un ralentisseur électrique à courants de Foucault propre à exercer sur elles un couple de freinage aux instants désirés, ledit ralentisseur comprenant d'une part un stator inducteur annulaire monté en porte-à-faux sur le carter de la boîte de vitesses du véhicule à l'aide d'une ossature appropriée, et d'autre part un rotor comportant deux disques induits en matériau ferromagnétique qui encadrent le stator et sont tous les deux supportés par une pièce elle-même montée en porte-à-faux sur un bout d'arbre intérieur au carter, chaque disque étant à cet effet solidarisé, par l'intermédiaire d'une couronne de bras formant ailettes de ventilation, avec une bague qui est à son tour fixée sur ladite pièce.

Dans les modes de réalisation connus des transmissions du genre en question, la pièce sur laquelle sont montées les deux bagues est en général un plateau intercalaire spécial qui est fixé, d'une part, sur une "bride de boite" calée sur un bout d'arbre intérieur au carter de la boîte et, d'autre part, du côté axial opposé audit bout d'arbre, sur une bride terminale du joint à cardan contigu (voir le document US-A-3 496 396).

Il est à noter en effet qu'il n'est pas possible en pratique de monter directement les couronnes rotoriques sur la bride de boîte, car le montage d'au moins la couronne disposée du côté de la boîte devrait alors être effectué avant mise en place de la bride sur la boîte.

Or, cette mise en place est effectuée par un emmanchement axial dur de cannelures complémentaires comprises respectivement par le bout d'arbre intérieur à la boite et par un manchon cylindrique prolongeant la bride : un tel emmanchement à force ne peut être exécuté qu'avec la bride non chargée.

Le plateau intercalaire spécial doit présenter une certaine épaisseur puisqu'il doit pouvoir transmettre la totalité des couples moteurs du véhicule du cardan à la bride de boîte.

De ce fait, il présente le double inconvénient d'un poids et d'un encombrement axial relativement élevés.

Ce dernier inconvénient peut se révéler sérieux dans le cas des transmissions très courtes, c'est-à-dire pour lesquelles on dispose d'un espace limité entre la sortie de la boîte et l'entrée du pont.

C'est en particulier le cas pour certains autobus modernes à moteur arrière, pour lesquels la longueur hors tout de l'ensemble moteur-boite et celle du pont arrière, notamment du type hypoïde, augmentent sans que soient modifiés les emplacements respectifs de ces organes.

Dans un tel cas, il est parfois très précieux de pouvoir réduire, même de quelques centimètres seulement, l'allongement de la transmission dû au montage d'un ralentisseur électrique du genre ci-dessus sur elle, la possibilité d'adopter un tel ralentisseur étant parfois directement liée à une telle réduction.

Pour réduire l'allongement indiqué, il a déjà été proposé par la Société LABAVIA - S.G.E. (demande de brevet FRANCE n° 89 08045 correspondant à la publication FR-A-2 648 638, publiée le 21.12.1990) d'agrandir transversalement la bride de boîte et de fixer les bagues rotoriques du ralentisseur sur la périphérie de cette bride agrandie par l'intermédiaire d'un intercalaire tubulaire s'étendant axialement à partir de cette périphérie du côté opposé à la boîte.

La bride terminale du joint à cardan concerné est alors directement fixée sur ladite bride de boîte, à l'intérieur dudit intercalaire tubulaire.

Cette construction est intéressante, en particulier du fait que l'intercalaire, n'ayant à transmettre que des couples de ralentissement et non des couples moteurs, peut être constitué par une pièce très légère, comprenant essentiellement un tronçon de tube renforcé par des nervures radiales internes.

Mais elle suppose que l'ouverture dégagée au centre du ralentisseur présente un grand diamètre, cette ouverture devant être suffisante pour recevoir concentriquement l'intercalaire tubulaire et, à l'intérieur de celui-ci, la bride du joint à cardan.

La présente invention propose une solution qui, d'une part, permet encore de raccourcir la transmission comme la solution précédente et qui, d'autre part, est applicable même aux ralentisseurs pour lesquels le diamètre de l'ouverture centrale est relativement petit, comme c'est le cas pour la plupart des ralentisseurs actuellement existants du genre considéré.

A cet effet, les transmissions du genre en question selon l'invention sont essentiellement caractérisées en ce qu'elles comprennent, entre la bride de boîte et le croisillon du joint à cardan le plus proche, un intercalaire tubulaire unique rapporté sur la périphérie de ladite bride de boîte du côté opposé à la boîte, cet intercalaire comportant des pattes radiales externes sur lesquelles sont rapportées axialement les deux bagues rotoriques du ralentisseur et étant évidé radialement, d'une part, par deux alésages coaxiaux formant paliers pour deux des tourillons du croisillon ci-dessus avec interposition de coussinets appropriés et, d'autre part, par deux lumières coaxiales dont l'axe est perpendiculaire à celui des deux paliers, lumières propres à livrer passage aux coussinets qui sont associés aux deux autres tourillons du croisillon pour leur montage pivotant dans la fourche correspondante du joint à cardan.

Dans des modes de réalisation préférés, on a recours en outre à l'une et/ou à l'autre des dispositions suivantes :
- la face terminale axiale, de l'intercalaire tubulaire, destinée à être appliquée contre la bride de boîte comprend, d'une part, des plages planes transversales propres à être appliquées jointivement contre des plages en regard de ladite bride et, d'autre part, des butées à flancs longitudinaux (encoches rectangulaires ou patins parallélépipédiques) propres à coopérer jointivement avec des butées complémentaires à flancs longitudinaux (patins ou encoches) de cette bride,
- l'une des deux pièces constituées respectivement par la bride de boîte et par l'intercalaire tubulaire comprend un talon annulaire propre à coiffer jointivement une portée annulaire comprise par l'autre pièce le long d'une surface de contact cylindrique de révolution,
- les coussinets se présentent sous la forme de pots cylindriques dont la paroi latérale interne est tapissée par des aiguilles longitudinales et dont le fond est évidé extérieurement par un trou fileté ou analogue permettant l'accrochage d'un outil d'extraction axiale.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre en coupe axiale une partie d'une transmission de véhicule équipée d'un ralentisseur électrique conformément à l'invention.

Les figures 2 à 5 montrent respectivement en vue en bout, en coupe axiale selon III-III, figure 2, en coupe partielle longitudinale selon IV-IV, figure 2 et en vue perspective, un intercalaire tubulaire faisant partie de la transmission ci-dessus, intercalaire établi selon l'invention.

Le ralentisseur électrique considéré est du type -connu sous la marque "FOCAL"- monté, avec un axe horizontal ou sensiblement horizontal, en porte-à-faux sur la sortie d'un carter de boîte de vitesses 1.

Ce ralentisseur comprend un stator inducteur 2 et un rotor induit 3.

Le stator 2 comprend un flasque de forme sensiblement annulaire 4 qui porte une couronne de bobines 5 en nombre pair agencées de façon à former par leurs extrémités deux suites annulaires de pôles magnétiques plans à polarités alternées de proche en proche.

Le flasque 4 est monté sur le carter de boîte 1 -ou plus précisément sur une monture intermédiaire 6 elle-même rapportée contre la face frontale plane dudit carter 1- par l'intermédiaire d'une structure 7 en forme d'étoile ou de cloche ajourée et de cales tubulaires 8.

Le rotor 3 comprend quant à lui deux disques 9 en matériau ferromagnétique propres à encadrer axialement le stator et à défiler chacun en regard d'une suite de pôles de ce stator dont ils sont séparés par un faible jeu ou entrefer e.

Chaque disque 9 est relié à une bague de fixation 10 par une couronne de bras recourbés 11 formant ailettes de ventilation et les deux bagues 10 sont boulonnées à l'aide de systèmes boulons-écrous 12 sur un anneau intermédiaire 13 sur lequel on reviendra plus loin.

Le problème à résoudre est le montage de cet anneau 13 sur une "bride de boîte" 14 définie comme suit tout en rendant possible l'accouplement sur la même bride de l'un des deux joints à cardan 15 de l'arbre 16 à double cardan, joint placé à l'intérieur dudit anneau 13.

La portion centrale de la monture de boîte 6 présente la forme d'un nez cylindrique 17 portant, par l'intermédiaire d'un roulement terminal 18, un manchon 19 dont l'extrémité axiale extérieure est prolongée radialement par la bride 14 appelée dans le présent texte "bride de boîte".

L'autre extrémité axiale du manchon 19 est cannelée intérieurement en 20 et est emmanchée à force sur l'embout 21 de la boîte, cannelé extérieurement en 22.

Cet emmanchement est réalisé à force pour éviter toute création de jeu et il est ensuite maintenu par vissage axial dans l'embout 21 de vis 23 dont les têtes sont appliquées contre une plaque 24 prenant elle-même appui sur le manchon 19.

Comme indiqué ci-dessus, c'est sur la bride de boîte 14 ainsi définie que l'on se propose de monter l'anneau 13 ci-dessus et le joint à cardan 15.

Pour raccourcir au maximum la transmission en raison des impératifs exposés plus haut, les longueurs axiales du nez 17 et du manchon 19 sont relativement petites et la bride 14 s'étend à proximité de l'extrémité axiale dudit nez 17.

De ce fait, et comme les deux couronnes rotoriques 9-12 sont identiques et présentent donc le même encombrement, il n'y aurait pas suffisamment de place dans le creux annulaire de la structure 7 pour y loger la couronne la plus proche de la boîte si l'anneau 13 était confondu avec la périphérie de la bride 14.

Une autre raison pour laquelle une telle solution ne peut être envisagée réside dans les exigences du montage par emmanchement à force, puisque, comme indiqué ci-dessus, il faudrait alors prévoir un montage de la couronne rotorique interne sur la bride avant le montage de cette bride sur la boîte.

C'est pour résoudre ces difficultés que l'on a généralement recours à un plateau intercalaire rapporté extérieurement sur la bride de boîte 14, la périphérie de ce plateau intercalaire constituant alors l'anneau 13, et la bride terminale du joint à cardan 15 étant alors fixée sur ledit plateau intercalaire.

Selon l'invention, on supprime ce plateau intercalaire, particulièrement lourd et encombrant, en remplaçant l'ensemble dudit plateau et de la bride terminale de cardan habituelle par un intercalaire tubulaire ou manchon unique 25.

En d'autres termes, l'anneau 13 ci-dessus fait partie de ce manchon 25, et ledit manchon 25 comprend deux alésages 26 servant eux-mêmes de paliers à deux des tourillons du croisillon 27 compris par le joint 15, tourillons désignés par la référence 28 alors que les deux autres tourillons sont désignés par la référence 29.

En outre on évide radialement dans le manchon 25 deux lumières 30 coaxiales dont l'axe commun est perpendiculaire à celui des deux paliers 26, lumières propres à livrer passage à des coussinets de montage spéciaux 31 pour les deux tourillons 29 du croisillon.

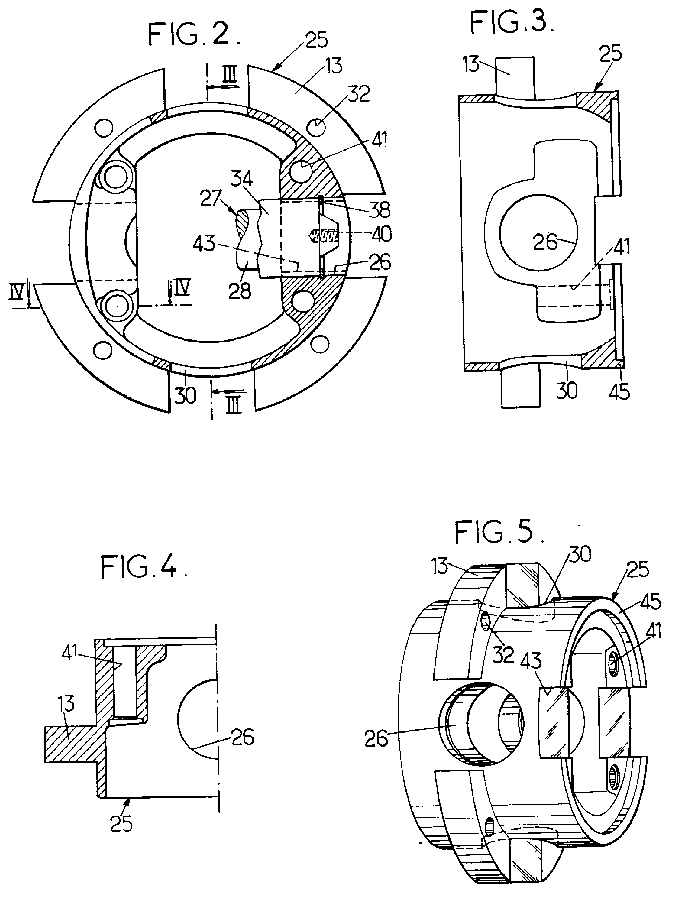

Comme bien visible sur les figures 2, 3 et 5, étant donné que les paliers 26 et les lumières 30 traversent le manchon 25 radialement de part en part et qu'ils sont situés au niveau de l'anneau extérieur 13, ce dernier est interrompu au niveau de ces paliers et lumières et est en définitive constitué par quatre oreilles.

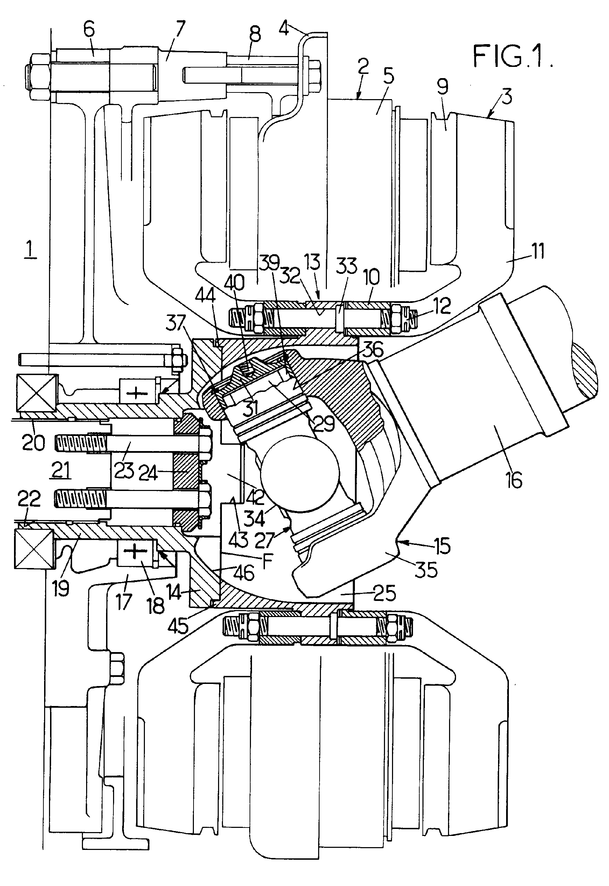

Chacune de ces oreilles est évidée par au moins un alésage 32 propre à recevoir un boulon 12 de fixation des couronnes rotoriques 10, une extrémité de cet alésage 32 étant conformée selon un rectangle propre à recevoir jointivement un tronçon carré 33 (figure 1) dudit boulon 12 aux fins de blocage angulaire de celui-ci.

Pour clarifier le dessin, la portion de l'anneau 13 qui a été représentée sur la figure 1 a été supposée décalée angulairement autour de son axe par rapport à la réalité de façon à rendre visibles les systèmes boulons-écrous 12 à la place des alésages 30 qui auraient dû être seuls visibles en raison de la façon dont a été représenté le croisillon 27 sur ladite figure 1.

Les quatre perçages (paliers 26 et lumières 30) effectués radialement de part en part dans le manchon 25 permettent de monter quatre coussinets spéciaux -savoir les deux coussinets 31 ci-dessus associés aux deux tourillons 29 du croisillon 27 et deux autres coussinets semblables 34 associés aux deux autres tourillons 28 dudit croisillon 27- après mise en place flottante de ce croisillon dans la fourche 35 du joint 15 et mise en place de cette fourche garnie de son croisillon flottant dans le manchon 25.

En effet, chacune de ces mises en place peut être effectuée malgré, d'une part, la relativement petite ouverture de la fourche et, d'autre part, le relativement petit diamètre interne du manchon 25, -dû lui-même au relativement petit diamètre interne des bagues rotoriques 10- grâce aux jeux alors réservés entre les tourillons et leurs logements, ce qui permet de présenter le croisillon en biais pour lesdites mises en place.

Chaque coussinet spécial 31,34 se présente sous la forme générale d'un pot cylindrique ajustable jointivement dans le palier correspondant 36 (figure 1) de la fourche 35 ou 26 (figure 2) du manchon 25, sa position axiale de fin de course dans ce palier étant maintenue par introduction d'une rondelle circlips 37,38 dans une gorge complémentaire évidée dans ledit palier.

La paroi intérieure de chaque coussinet est tapissée par des aiguilles ou rouleaux ainsi que visible en 39 sur la figure 1.

Le fond de chaque coussinet 31,34 est percé extérieurement en son centre par un trou fileté 40 facilitant son extraction axiale, après dégagement du circlips correspondant de sa gorge, en rendant possible l'accrochage d'un outil d'extraction par vissage de cet outil dans ledit trou.

Pour fixer le manchon 25 sur la bride de boîte 14, on a recours à quatre vis (non représentées) traversant des alésages cylindriques 41 évidés dans des surépaisseurs du manchon prévues de part et d'autre de chaque palier 26, ces vis étant vissées dans des trous filetés (non représentés) de la bride.

Lors de ce vissage, une face plane transversale du manchon est directement appliquée contre une face plane transversale F de la bride, ce qui définit exactement les entrefers du ralentisseur.

Le transfert des couples appliqués sur l'arbre de transmission entre les deux pièces 14 et 25 est avantageusement effectué en coiffant jointivement des patins ou pavés parallélépipédiques 42 faisant partie de la bride 14 par des encoches complémentaires 43 évidées dans la jupe du manchon 25.

Quant au centrage relatif entre la bride 14 et le manchon 25 par rapport à l'axe de révolution commun à ces deux pièces, il est obtenu en faisant coiffer jointivement une portée cylindrique de révolution 44 délimitant le pourtour de la bride par un rebord cylindrique de révolution 45 faisant partie du manchon.

Pour monter une transmission du genre décrit ci-dessus, on procède comme suit.

On suppose initialement la boîte 1 équipée de sa bride 14.

Puis on monte le joint de cardan 15 dans le manchon intercalaire 25 en introduisant successivement son croisillon 27 dans la fourche 35 dégarnie de ses coussinets 31, puis ladite fourche équipée du croisillon encore flottant dans le manchon 25 dégarni de ses coussinets 34.

Comme dit plus haut, c'est le jeu important dû à l'absence des coussinets qui rend possibles les présentations en biais du croisillon rendues nécessaires par lesdites introductions.

Après ces introductions, on complète les montages des différents tourillons dans leurs paliers en venant les coiffer axialement par les coussinets correspondants, à travers les ouvertures appropriées 26,30 du manchon, puis en mettant en place les circlips 37,38 dans les gorges correspondantes.

On monte ensuite le rotor 3 du ralentisseur sur l'anneau 13 ou plus exactement sur les quatre oreilles qui composent cet anneau à l'aide des systèmes boulons-écrous 12 et l'on monte enfin le manchon 25 garni intérieurement du joint à cardan 15 et extérieurement du rotor 3 du ralentisseur sur la bride de boîte 14 en rapprochant d'abord axialement ces deux pièces l'une de l'autre avec chevauchement axial, d'une part, des patins 42 par les flancs des encoches 43 et, d'autre part, de la portée cylindrique 44 par le rebord cylindrique 45, puis en vissant dans les trous filetés de la bride les vis de fixation logées dans les alésages 41.

Le démontage de la transmission se fait très simplement par la suite d'opérations inverse de la précédente, le dégagement de chaque coussinet étant effectué à l'aide d'un outil extracteur vissé dans le trou fileté 40 de ce coussinet.

On voit encore sur la figure 1 des alvéoles 46 creusés dans la face frontale externe de la bride de boîte 14, alvéoles destinés à recevoir les bras de la fourche 35 lorsque l'axe de l'arbre à cardan 16 est fortement incliné sur celui de ladite bride, comme c'est le cas pour la figure 1.

En suite de quoi, et quel que soit le mode de réalisation adopté, on dispose finalement d'une transmission de véhicule équipée d'un ralentisseur électrique du type FOCAL, dont la constitution et le montage résultent suffisamment de ce qui précède.

Cette transmission présente le double avantage :
- d'être extrêmement courte, la distance axiale entre le centre du croisillon 27 et la face frontale F d'application du manchon intercalaire 25 sur la bride de boîte 14 pouvant être aussi petite que 50 mm pour un ralentisseur électrique dont le diamètre extérieur est de l'ordre de 500 mm,
- et de pouvoir être utilisée avec un ralentisseur électrique d'un type actuellement existant, c'est-à-dire présentant une ouverture centrale relativement étroite, le diamètre intérieur de ses bagues rotoriques 10 pouvant être aussi petit que 180 mm.

On notera également le très petit nombre des organes de fixation requis.

En effet, à part les systèmes boulons-écrous 12 prévus comme à l'habitude pour fixer les deux bagues rotoriques 10 sur l'anneau 13 ici discontinu, les seuls organes de fixation nécessaires sont les quatre vis logées dans les alésages 41 du manchon intercalaire 25 : en particulier la construction proposée comprend moins d'organes de vissage que celle évoquée ci-dessus pour laquelle les bagues rotoriques sont fixées sur un intercalaire tubulaire lui-même rapporté sur la périphérie agrandie de la bride de boîte et pour laquelle le joint à cardan comprend une bride terminale normale directement fixée sur ladite bride de boîte.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes couvertes par les revendications, notamment celles où le transfert des couples entre la bride de boîte 14 et le manchon 25 serait assuré par des dentures complémentaires prévues respectivement sur ces deux pièces, ou encore par de simples vis ou boulons dont les diamètres et/ou nombres seraient augmentés par rapport à ceux de la réalisation ci-dessus décrite.

## Revendications

1. Transmission de véhicule comprenant une boîte de vitesses (1), un pont, un arbre à double cardan (16) interposé entre ces deux organes et un ralentisseur électrique à courants de Foucault comportant, d'une part, un stator inducteur annulaire (2) monté en porte-à-faux sur le carter de la boîte de vitesses à l'aide d'une ossature appropriée (7) et, d'autre part, un rotor (3) comportant deux disques induits (9) en matériau ferromagnétique qui encadrent le stator et sont tous les deux supportés par une bride de boîte (14) elle-même emmanchée en porte-à-faux sur un bout d'arbre (19) intérieur au carter, chaque disque étant à cet effet solidarisé, par l'intermédiaire d'une couronne de bras (11) formant ailettes de ventilation, avec une bague (10) qui est à son tour fixée sur ladite bride, caractérisée en ce qu'elle comprend en outre, entre la bride de boîte (14) et le croisillon (27) du joint à cardan le plus proche (15), un intercalaire tubulaire unique (25) rapporté sur la périphérie de ladite bride de boîte du côté opposé à la boîte, cet intercalaire comportant des pattes radiales externes (13) sur lesquelles sont rapportées axialement les deux bagues rotoriques (10) du ralentisseur et étant évidé radialement, d'une part, par deux alésages coaxiaux (26) formant paliers pour deux des tourillons (28) du croisillon ci-dessus avec interposition de coussinets appropriés (34) et, d'autre part, par deux lumières coaxiales (30) dont l'axe est perpendiculaire à celui des deux paliers, lumières propres à livrer passage aux coussinets (31) qui sont associés aux deux autres tourillons (29) du croisillon pour leur montage pivotant dans la fourche correspondante (35) du joint à cardan.

2. Transmission de véhicule selon la revendication 1, caractérisée en ce que la face terminale axiale, de l'intercalaire tubulaire (25), destinée à être appliquée contre la bride de boîte (14) comprend, d'une part, des plages planes transversales propres à être appliquées jointivement contre des plages en regard (F) de ladite bride et, d'autre part, des butées à flancs longitudinaux (encoches rectangulaires (43) ou patins parallélépipédiques) propres à coopérer jointivement avec des butées complémentaires à flancs longitudinaux (patins (42) ou encoches) de cette bride.

3. Transmission de véhicule selon l'une quelconque des précédentes revendications, caractérisée en ce que l'une des deux pièces constituées respectivement par la bride de boîte (14) et par l'intercalaire tubulaire (25) comprend un talon annulaire (45) propre à coiffer jointivement une portée annulaire (44) comprise par l'autre pièce le long d'une surface de contact cylindrique de révolution.

4. Transmission de véhicule selon l'une quelconque des précédentes revendications, caractérisée en ce que les coussinets (31,34) se présentent sous la forme de pots cylindriques dont la paroi latérale interne est tapissée par des aiguilles longitudinales (39) et dont le fond est évidé extérieurement par un trou fileté ou analogue (40) permettant l'accrochage d'un outil d'extraction axiale.

## Patentansprüche

1. Fahrzeuggetriebe mit einem Getriebegehäuse (1), einer Brücke, einer Doppelkardanwelle (16), die zwischen diesen beiden Organen eingeschaltet ist, und einer elektrischen Wirbelstrombremse, die einerseits einen ringförmigen induzierenden Stator (2), der am Getriebegehäuse mit Hilfe eines geeigneten Tragwerkes (7) auskragend montiert ist, und anderseits einen Rotor (3) aufweist, der zwei induzierte Scheiben (9) aus ferromagnetischem material besitzt, welche den Stator umgeben und beide von einem Gehäuseflansch (14) getragen sind, der seinerseits an einem Wellenende (19) im Inneren des Gehäuses auskragend montiert ist, wobei jede Scheibe zu diesem Zweck über einen Armkranz (11), der Ventilationsflügel bildet, mit einem Ring (10) verbunden ist, der seinerseits an dem Flansch befestigt ist, dadurch gekennzeichnet, daß das Getriebe ferner zwischen dem Gehäuseflansch (14) und dem Kreuzstück (27) des nächstgelegenen Kardangelenkes (15) ein einziges rohrförmiges Zwischenstück (25) aufweist, das am Umfang des Gehäuseflansches auf der dem Gehäuse entgegengesetzten Seite befestigt ist, wobei dieses Zwischenstück äußere radiale Ansätze (13) aufweist, an denen die beiden Rotorringe (10) der Bremse axial befestigt sind, und in radialer Richtung einerseits von zwei koaxialen Bohrungen (26), die Lager für zwei Zapfen (28) des erwähnten Kreuzstückes unter Zwischenschaltung von geeigneten Lagerbuchsen (34) bilden, und anderseits von zwei koaxialen Öffnungen (30) durchsetzt ist, deren Achse senkrecht zu der Achse der beiden Lagern ist, wobei die Öffnungen für den Durchtritt der Lagerbuchsen (31) dienen, die den beiden anderen Zapfen (29) des Kreuzstückes für ihre Schwenkmontage in der entsprechenden Gabel (35) des kardangelenkes zugeordnet sind.

2. Fahrzeuggetriebe nach Anspruch 1, dadurch gekennzeichnet, daß die axiale Stirnseite des rohrförmigen Zwischenstückes (25), die zur Anlage am Gehäuseflansch (14) bestimmt ist, einerseits ebene Bereiche aufweist, die gegen
gegenüberliegenden Seiten (F) des Flansches eng anlegbar sind, und anderseits Längsanschlagflanken (rechteckige Ausnehmungen (43) oder parallelepipedische Gleitansätze) zum Zusammenwirken mit komplementären Längsanschlagflanken (Gleitansätze (42) oder Ausnehmungen) des Flansches.

3. Fahrzeuggetriebe nach einem der vorhergehenden Ansprüche, dadurch gekennzeichnet, daß einer der beiden Teile, welche durch den Gehäuseflansch (14) und durch das rohrförmige Zwischenstück (25) gebildet sind, einen ringförmigen Steg (45) aufweist, welcher einen ringförmigen Absatz (44) eng anliegend überdeckt, der vom anderen Teil entlang einer drehzylindrischen Kontaktfläche gebildet ist.

4. Fahrzeuggetriebe nach einem der vorhergehenden Ansprüche, dadurch gekennzeichnet, daß die Lagerbuchsen (31, 34) die Form von zylindrischen Töpfen haben, deren innere Seitenwände mit Längsnadeln (39) versehen sind und deren Boden an der Außenseite mit einer Gewindebohrung (40) od.dgl. versehen ist, welche die Verankerung eines Werkzeuges zum axialen Herausziehen ermöglicht.

## Claims

1. Vehicle transmission comprising a gearbox (1) , a rear axle, a double jointed cardan shaft (16) inserted between these two members and an electric eddy current retarder comprising, on the one hand, an annular inductor stator (2) cantilevered on the gearbox casing by means of an appropriate frame (7) and, on the other hand, a rotor (3) comprising two armature discs (9) made from a ferromagnetic material which surround the stator and are both supported by a gearbox flange (14) itself cantilevered on a stub shaft (19) inside the casing, each disc being fixed for this purpose, via a circle of arms (11) forming ventilation fins, with a ring (10) which is in its turn fixed to said flange,
characterized in that it further comprises, between the gearbox flange (14) and the journal cross (27) of the nearest cardan joint (15), a single tubular insert (25) fixed to the periphery of said gearbox flange on the side opposite the gearbox, this insert comprising external radial lugs (13) on which the two rotor rings (10) of the retarder are fixed axially and being formed radially, on the one hand, with two coaxial bores (26) forming bearings for two of the journals (28) of the above journal cross with interpositioning of appropriate bushings (34) and, on the other hand, with two coaxial apertures (30) whose axis is perpendicular to that of the two bearings, which apertures are adapted to let pass the bushings (31) which are associated with the other two journals (29) of the journal cross for pivotally mounting same in the corresponding fork (35) of the cardan joint.

2. Vehicle transmission according to claim 1, characterized in that the axial end face, of the tubular insert (25), intended to be applied against the gearbox flange (14), comprises, on the one hand, flat transverse zones adapted to be applied jointingly against opposite zones (F) of said flange and, on the other hand, stops with longitudinal sides (rectangular recesses 43 or parallelepipedic shoes) adapted to cooperate jointingly with complementary stops with longitudinal sides (shoes 42 or recesses) of this flange.

3. Vehicle transmission according to anyone of the preceding claims, characterized in that one of the two parts formed respectively by the gearbox flange (14) and by the tubular insert (25) comprises an annular heel (45) adapted to jointingly cover an annular bearing surface (44) of the other part along a cylindrical contact surface of revolution.

4. Vehicle transmission according to anyone of the preceding claims, characterized in that the bushings (31, 34) are in the form of cylindrical pots whose internal lateral wall is lined with longitudinal needles (39) and the bottom of which is formed externally with a threaded hole or similar (40) for engaging an axial extraction tool.
